Europäisches Patentamt

European Patent Office

Office européen des brevets

(19)

(11) Numéro de publication: **0 065 466**
**B1**

(12) **FASCICULE DE BREVET EUROPEEN**

(45) Date de publication du fascicule du brevet:
20.03.85

(51) Int. Cl.⁴: **B 65 G 47/24**

(21) Numéro de dépôt: **82400884.1**

(22) Date de dépôt: **12.05.82**

---

(54) **Dispositif pour la distribution automatique et orientée de corps creux tels que flacons à col par exemple.**

---

(30) Priorité: **13.05.81 FR 8109493**

(43) Date de publication de la demande:
**24.11.82 Bulletin 82/47**

(45) Mention de la délivrance du brevet:
**20.03.85 Bulletin 85/12**

(84) Etats contractants désignés:
**BE CH DE GB LI**

(56) Documents cités:
**CH - A - 479 472**
**DE - A - 1 756 942**
**FR - A - 2 134 224**
**FR - A - 2 207 850**
**GB - A - 1 042 749**
**US - A - 3 690 437**

(73) Titulaire: **Dubuit, Jean-Louis, 63 Rue du Chemin Vert, F-75011 Paris (FR)**

(72) Inventeur: **Dubuit, Jean-Louis, 63 Rue du Chemin Vert, F-75011 Paris (FR)**

(74) Mandataire: **CABINET BONNET-THIRION, 95 Boulevard Beaumarchais, F-75003 Paris (FR)**

---

ACTORUM AG

## Description

La présente invention concerne d'une manière générale les dispositifs propres à assurer une distribution automatique et orientée de corps creux à un quelconque poste de travail, en vue de leur remplissage, de leur étiquetage, ou d'une quelconque autre opération à leur appliquer.

Elle vise plus particulièrement, mais non exclusivement, le cas où les corps creux à traiter sont des flacons à col, c'est-à-dire des flacons ou bouteilles présentant un goulot.

S'agissant, par exemple, du remplissage de tels flacons, il est clair qu'ils doivent être présentés au poste de travail correspondant dans une orientation pour laquelle ils ont leur goulot dirigé vers le haut.

D'une manière générale, les dispositifs propres à une distribution automatique de flacons ou autres corps creux ainsi orientés comportent, notamment, un bac d'alimentation dans lequel lesdits corps creux sont déversés en vrac, une pluralité de couloirs de reprise à convoyeur sans fin individuel plongeant dans ledit bac, une pluralité de colonnes de chute disposées chacune respectivement à l'aplomb de l'extrémité d'un couloir de reprise, et un convoyeur d'évacuation disposé à l'aplomb desdites colonnes de chute.

A la partie haute de chacune des colonnes de chute est en pratique disposé un dispositif de retournement sélectif qui, lorsqu'un corps creux se présente suivant une orientation qui n'est pas la bonne, assure le retournement de celui-ci pour sa chute dans le bon sens dans la colonne concernée, et qui, lorsqu'un tel corps creux se présente au contraire avec l'orientation souhaitée, s'efface sous la poussée de celui-ci et le laisse donc chuter librement dans la colonne concernée, sans autre intervention.

S'agissant par exemple du traitement de flacons à col, un tel dispositif de retournement peut être constitué par une trappe en forme de trapèze, qui est montée pivotante, et dans la boucle duquel un flacon s'engage normalement par son col lorsqu'il se présente col en avant à l'entrée de la colonne de chute concernée, ce qui en assure le retournement avant sa chute dans cette dernière.

Les flacons reçus par le convoyeur d'évacuation viennent donc tous porter normalement par leur culot sur celui-ci, avant d'être dirigés par lui vers le poste de travail à alimenter.

Un dispositif propre à une telle distribution automatique et orientée de corps creux se trouve notamment décrit dans le brevet français déposé sous le N° 71 5110 le 28 avril 1971 et publié sous le N° FR-A-2 134 224, ainsi que dans le premier certificat d'addition, qui, rattaché à ce brevet, a été déposé sous le N° 71 41267 le 18 novembre 1971 et a été publié sous le N° FR-A-2 134 224.

Dans le brevet français FR-A-2 134 224, il a été en outre proposé d'équiper individuellement chacune des colonnes de chute d'un détecteur de présence, qui, sensible à la présence prolongée à son droit d'un corps creux, est apte à commmander en conséquence l'arrêt du convoyeur sans fin du couloir de reprise correspondant.

Grâce à une telle disposition, lorsque, pour une raison ou une autre, une colonne de chute se trouve engorgée, le convoyeur sans fin du couloir de reprise qui l'alimente est automatiquement arrêté, ce qui évite une perturbation du fonctionnement de l'ensemble.

Bien que de tels dispositifs de distribution automatique et orientée de corps creux aient donné et puissent encore donner satisfaction, ils présentent un inconvénient, qui est de nécessiter, en pratique, pour leur desserte, la présence permanente d'une personne propre à en contrôler le fonctionnement.

En effet, divers incidents peuvent en perturber ce fonctionnement.

Tout d'abord, il peut arriver que le dispositif de retournement sélectif équipant une colonne de chute se trouve en défaut, et que, s'agissant du traitement de flacons à col par exemple, un tel flacon se présente col en avant sur le convoyeur d'évacuation destiné à le recueillir à la base de cette colonne de chute.

Son assise sur le convoyeur d'évacuation n'étant dès lors pas assurée, il bascule, ce qui, par les sécurités usuellement mise en oeuvre, ne manque pas de provoquer l'arrêt total de l'ensemble du dispositif.

Ainsi, un simple incident mineur de fonctionnement sur une des colonnes de chute de ce dispositif a intempestivement une répercussions sur la totalité de celui-ci.

Il en est de même si, par exemple, s'agissant du traitement de flacons en matière synthétique, un tel flacon, de fabrication défecteuse, présente, en saillie sur son culot, une quelconque carotte de moulage.

La stabilité d'un tel flacon sur le convoyeur d'évacuation étant elle aussi mal assurée, il en résulte généralement l'arrêt de l'ensemble du dispositif.

Il peut arriver encore, avec de tels flacons en matière synthétique, qu'un flacon plus ou moins écrasé ait transversalement une dimension suffisante pour se bloquer intempestivement dans une colonne de chute dès son entrée dans celle-ci, et, de ce fait, provoquer un engorgement de cette colonne de chute en deçà du détecteur de présence équipant celle-ci, un tel détecteur de présence étant, en pratique, usuellement prévu à la base d'une telle colonne de chute.

Dans un tel cas, le convoyeur sans fin du couloir de reprise correspondant continue à fonctionner, malgré l'engorgement de la colonne de chute, ce qui peut conduire à une perturbation globale du fonctionnement de l'ensemble.

Bien que, en pratique, les divers incidents de fonctionnement succinctement décrits ci-dessus et relativement peu fréquents nécessitent à chaque fois l'intervention d'une personne, pour éliminer le flacon défectueux et remettre en route l'ensemble du dispositif, cette personne, malgré la périodicité relativement grande de ses interventions effectives, se trouve nécessairement mobilisée en permanence.

La présente invention a d'une manière générale pour objet des dispositions de nature à minimiser les conséquences des incidents de fonctionnement en question, et donc de nature à permettre de réduire et régulariser la surveillance à exercer.

De manière plus précise, la présente invention a pour objet un dispositif pour la distribution automatique et orientée de corps creux, tels que flacons à col par exemple, du genre comportant, notamment, un bac d'alimentation dans lequel lesdits corps creux sont déversés en vrac, une pluralité de couloirs de reprise à convoyeur sans fin individuel plongeant dans ledit bac, une pluralité de colonnes de chute disposées chacune respectivement à l'aplomb de l'extrémité d'un couloir de reprise, et un convoyeur d'évacuation disposé à l'aplomb desdites colonnes de chute, chacune desdites colonnes de chute étant individuellement équipée d'un détecteur de présence, qui, sensible à la présence prolongée à son droit d'un corps creux, est apte à commander en conséquence l'arrêt du convoyeur sans fin du couloir de reprise correspondant, ce dispositif étant caractérisé en ce que, à la base de chaque colonne de chute, en dessous du détecteur de présence de celle-ci, il est prévu un capteur apte à retenir un corps creux si celui-ci se présente suivant l'orientation opposée à celle recherchée.

Par exemple, s'agissant du traitement de flacons à col, ce capteur peut être très simplement constitué, à la manière des dispositifs de retournement sélectif décrits ci-dessus, par une boucle dans laquelle peut s'engager le col d'un tel flacon ou une quelconque autre saillie de celui-ci, et être monté librement pivotant entre, d'une part, une position normale d'attente, pour laquelle sa dite boucle s'étend sensiblement transversalement dans la colonne de chute et est ainsi interposée sur le trajet des flacons, et d'autre part, une position basculée de service, pour laquelle, soit, repoussé par un flacon, il laisse passer celui-ci, soit, un flacon étant venu en prise avec sa boucle, il retient par coincement ledit flacon, et il lui est associé des moyens de rappel qui le sollicitent en permanence en direction de sa dite position normale d'attente, un simple contrepoids par exemple.

Ainsi, un tel capteur, lorsqu'un flacon se présente col en avant, retient mécaniquement celui-ci de manière définitive, c'est-à-dire jusqu'à intervention d'un opérateur.

Il en résulte un double effet.

Tout d'abord, le flacon à éliminer ne parvient pas au convoyeur d'évacuation desservant l'ensemble des colonnes de chute, et est donc empêché d'y créer un quelconque incident de fonctionnement de nature à provoquer, comme mentionné ci-dessus, l'arrêt général du dispositif.

Les conséquences de la présence d'un tel flacon défectueux se trouvent ainsi avantageusement localisées dans la seule colonne de chute dans laquelle est alors immobilisé celui-ci, sans incidence sur le fonctionnement de l'ensemble du dispositif.

En outre, du fait de l'immobilisation de ce flacon défectueux, la colonne de chute concernée se trouve progressivement engorgée, et son engorgement, relevé par le détecteur de présence correspondant, qui se trouve en amont du capteur suivant l'invention, provoque, de manière usuelle, l'arrêt du convoyeur sans fin du couloir de reprise alimentant cette colonne de chute, sans qu'il n'en résulte non plus une quelconque incidence sur le fonctionnement de l'ensemble du dispositif.

Ainsi, et jusqu'à intervention d'un opérateur, le capteur suivant l'invention provoque délibérément l'engorgement de la colonne de chute concernée, pour mise hors service de celle-ci par le détecteur de présence qui lui est associé.

Il est à souligner que si, dans la forme de réalisation envisagée ci-dessus, le capteur suivant l'invention présente une structure semblable à celle d'un dispositif de retournement sélectif classique, d'une part il assume une fonction différente de celle assumée par un tel dispositif de retournement, puisqu'il s'agit, pour lui, d'immobiliser par coincement un flacon défectueux, et non pas d'en assurer un retournement, et, d'autre part, dans le but poursuivi, qui est d'assurer un arrêt localisé de la seule colonne de chute concernée, il coopère avec le détecteur de présence équipant usuellement cette colonne de chute, en provoquant un engorgement de celle-ci.

Le capteur suivant l'invention intervient donc avantageusement en combinaison avec un tel détecteur de présence.

Suivant l'invention, en partie haute de chaque colonne de chute, il est prévu un deuxième détecteur de présence, qui, en parallèle par rapport au premier, est apte à commander l'arrêt du convoyeur sans fin du couloir de reprise correspondant, et, de préférence, ce deuxième détecteur de présence est piloté par un volet qui, de longueur supérieure à la hauteur des corps creux à traiter, s'étend longitudinalement de part et d'autre dudit détecteur de présence dans la colonne de chute, en doublant en épaisseur l'une des parois de celle-ci, à distance de cette paroi.

Ainsi, ce deuxième détecteur de présence se trouve entrer en action dès que, par coincement dans la colonne de chute, comme c'est le cas avec un flacon partiellement écrasé, un tel flacon vient appuyer de manière suffisante en un point quelconque du volet prévu suivant l'invention.

Tout engorgement d'une colonne de chute dû à un tel flacon défectueux se trouve donc provoquer le seul arrêt de l'alimentation de celle-ci, sans conséquence, comme précédemment, sur le fonctionnement de l'ensemble du dispositif.

Ainsi, le dispositif suivant l'invention, est avantageusement susceptible d'une grande régularité de fonctionnement, seule une ou plusieurs de ses colonnes de chute pouvant momentanément se trouver arrêtées.

Certes, dans le brevet anglais GB-A-1 042 749, il est prévu successivement, sur les colonnes de chute d'un dispositif de distribution, trois dispositifs d'arrêt, qui, pour des raisons et selon des modalités diverses, sont chacun propres à stopper les objets concernés.

Mais, outre que, selon toute apparence, leur intervention n'est que temporaire, ces dispositifs d'arrêt ne constituent pas des «capteurs», aptes, au sens de la présente demande, à «retenir» de manière définitive un objet défectueux ou se présentant sous une orientation défectueuse, c'est-à-dire aptes à empêcher un tel objet, et seulement celui-ci, de poursuivre son cheminement dans la colonne de chute correspondante.

Ils interviennent au contraire indifféremment, et sans retenue définitive, sur tous les objets leur parvenant.

De plus, si, à l'un de ces dispositifs d'arrêt il est associé un détecteur de présence, pour comptage des objets, il ne coopère pas avec ce détecteur de présence pour un quelconque arrêt de l'alimentation de la colonne de chute concernée, au contraire du capteur suivant l'invention.

Suivant un développement de l'invention, à chacune des colonnes de chute il est associé, éventuellement à un poste éloigné, un organe de signalisation, tel que voyant lumineux par exemple, de préférence temporisé, qui, piloté par l'un et/ou l'autre des détecteurs de présence équipant une telle colonne de chute, est donc, en pratique, sensible à l'état de fonctionnement ou d'arrêt du convoyeur sans fin du couloir de reprise correspondant à celle-ci.

Ainsi, la personne attachée à la surveillance du dispositif suivant l'invention peut avantageusement assumer parallèlement d'autres fonctions.

A tout instant, par simple observation d'un cadran général, elle est informée du nombre de colonnes de chute restant en service, et, dès lors, et donc sans être mobilisée en permanence, elle peut choisir au mieux l'instant de son intervention, en fonction des nécessités du moment et de l'urgence relative qu'il y a à y faire face.

Il est même possible, suivant un développement complémentaire, d'envisager la gestion du dispositif suivant l'invention ou d'une pluralité de tels dispositifs par un microprocesseur qui, par exemple, en fonction d'une part du nombre de flacons à présenter au poste de travail à desservir, et d'autre part du nombre de flacons comptés à la sortie du ou des dispositifs de distribution correspondants, compte tenu du nombre de colonnes de chute effectivement en marche de ceux-ci, contrôle automatiquement si une quelconque intervention sur un tel dispositif est immédiatement nécessaire.

Les caractéristiques et avantages de l'invention ressortiront d'ailleurs de la description qui va suivre, à titre d'exemple, en référence aux dessins schématiques annexés sur lesquels:

la figure 1 est une vue en élévation de l'arrière, avec un arrachement local, d'un dispositif de distribution suivant l'invention, suivant la flèche I de la figure 2;

la figure 2 est une vue en coupe de ce dispositif de distribution, suivant la ligne II-II de la figure 1;

la figure 3 est, à échelle différente, une vue partielle en élévation de l'avant d'une seule des colonnes de chute que comporte ce dispositif de distribution, représentée isolément;

la figure 4 est une vue en coupe longitudinale de cette colonne de chute, suivant la ligne IV-IV de la figure 3;

les figures 5, 6 et 7 en sont des vues en coupe transversale, suivant les lignes V-V, VI-VI et VII-VII de la figure 3;

la figure 8 reprend, à échelle supérieure, le détail de la figure 5 repéré par un encart VIII sur celle-ci;

la figure 9 reprend, elle aussi à échelle supérieure, le détail de la figure 7 repéré par un encart IX sur celle-ci ;

la figure 10 est une vue en perspective du capteur mis en oeuvre dans une colonne de chute suivant l'invention;

la figure 11 est un bloc diagramme des divers détecteurs contrôlant le fonctionnement d'une telle colonne de chute;

la figure 12 reprend pour partie la figure 4 et illustre notamment le mode d'intervention du capteur équipant suivant l'invention une colonne de chute.

Sur ces figures, qui illustrent, à titre d'exemple, le traitement de flacons à col, cest-à-dire de flacons 10 comportant un goulot 11 et un culot 12, on reconnnaît un dispositif de distribution du type de celui décrit dans le brevet français N° FR-A-2 134 224 mentionné ci-dessus.

Ce dispositif de distribution comporte globalement un bac d'alimentation 13, dans lequel les flacons 10 à traiter sont déversés en vrac, une pluralité de couloirs de reprise 14, qui sont au nombre de dix dans l'exemple de réalisation représenté, et qui plongent obliquement dans le bac d'alimentation 13, une pluralité de colonnes de chute 15, qui sont également au nombre de dix dans l'exemple de réalisation représenté, et qui sont disposées chacune respectivement à l'aplomb de l'extrémité d'un couloir de reprise 14, et un convoyeur d'évacuation 16, qui est disposé à l'aplomb des colonnes de chute 15.

Un tel dispositif de distribution étant bien connu par lui-même, il ne sera pas décrit ici dans tous ses détails.

Seuls en seront décrits les éléments constructifs nécessaires à la compréhension de l'invention.

Les couloirs de reprise 14 et les colonnes de chute 15 sont conjointement formés entre des joues ou flasques parallèles 17.

Chaque couloir de reprise 14 comporte essentiellement, entre deux de telles joues 17, un convoyeur sans fin individuel 18, qui s'étend globalement obliquement de la base du bac d'alimentation 13 à la partie haute de la colonne de chute 15 correspondante.

De place en place, il porte transversalement des pales 19 propres chacune à l'entraînement d'un flacon 10.

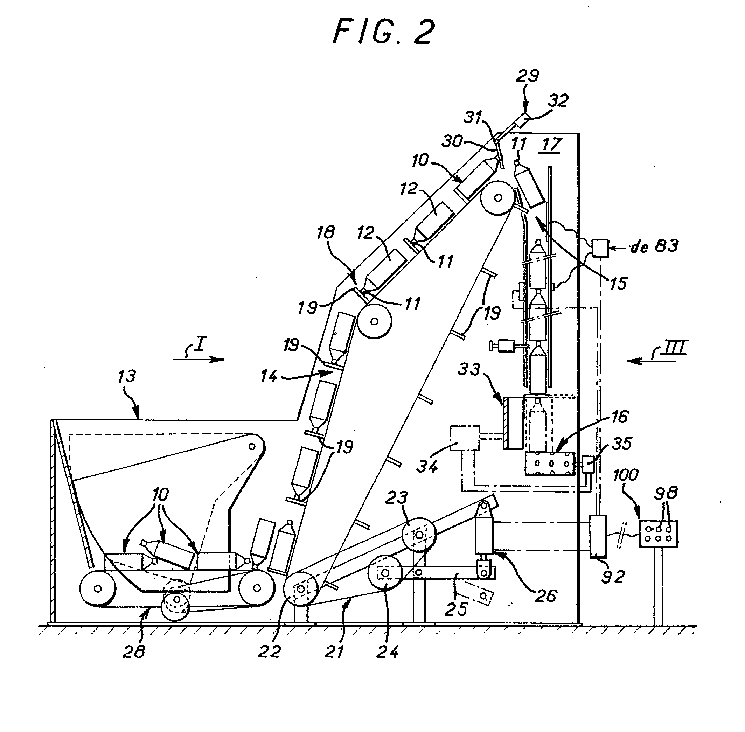

Son état d'arrêt ou de fonctionnement est sous le contrôle d'une courroie d'entraînement 21 passée en boucle sans fin, outre son propre organe de renvoi correspondant 22, sur une poulie motrice 23 et une poulie de tension 24, figure 2.

Cette dernière est portée par un levier 25 monté pivotant sous le contrôle d'un vérin 26.

Ainsi qu'il est aisé de la comprendre, lorsque le levier 25 occupe la position représentée en trait plein à la figure 2, la courroie 21 est sous tension, et le convoyeur 18 est donc entraîné par celle-ci; autrement dit, ce convoyeur 18 est alors en état de fonctionnement.

Au contraire, lorsque, sous le contrôle du vérin 26, le levier 25 occupe la position schématisée en traits interrompus à la figure 2, la courroie d'entraînement est lâche, et elle n'est plus dès lors en mesure d'assurer l'entraînement du convoyeur 18; autrement dit, celui-ci est alors en état d'arrêt.

A la base du convoyeur 18 de chaque couloir de reprise 14 il est associé, dans le bac d'alimentation 13, un convoyeur 28, propre à diriger vers le convoyeur 18 des flacons 10.

A la partie haute du convoyeur 18 de chaque couloir de reprise 14, il est associé, à l'entrée de la colonne de chute 15 correspondante, un dispositif de retournement sélectif 29.

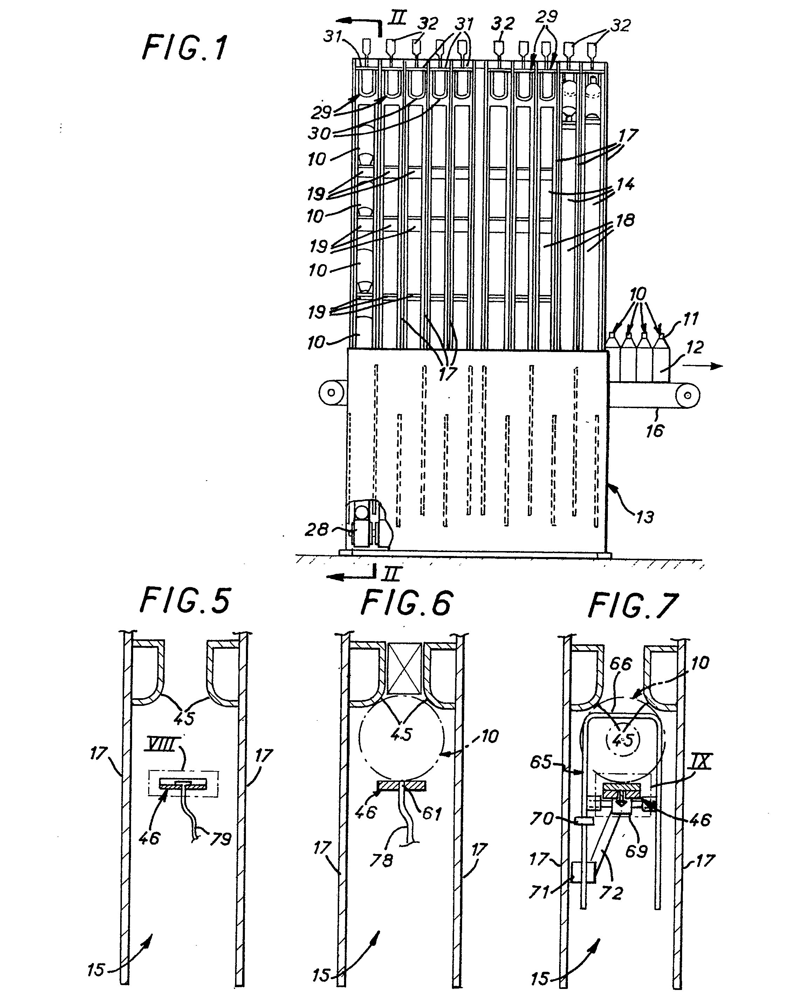

S'agissant du traitement de flacons à col, comme précisé ci-dessus, un tel dispositif de retournement sélectif 29 comporte, dans la forme de réalisation représentée, une trappe en forme de trapèze 30 montée pivotante en 31 à l'encontre de moyens de rappel appropriés, tels qu'un simple contrepoids 32 dans l'exemple de réalisation représenté, figures 1 et 2.

Lorsqu'un flacon 10, entraîné par le convoyeur 18, se présente culot 12 en avant à un tel dispositif de retournement sélectif 29, il repousse simplement la trappe 30 de celui-ci, et tombe culot en avant dans la colonne de chute 15 correspondante.

Par contre, s'il se présente goulot 11 en avant, il s'engage par son goulot dans la trappe 30, tel que représenté à la figure 2, et, ainsi momentanément retenu par son goulot 11 alors qu'il est poussé par son culot 12 par le convoyeur 18 qui le porte, il est normalement contraint de se retourner avant de s'engager sur la colonne de chute 15.

Comme précédemment, il tombe donc normalement culot en avant dans cette colonne de chute 15.

Mais, en pratique, un tel retournement peut de temps à autre ne pas s'effectuer, et le flacon 10 correspondant tombe alors goulot en avant dans la colonne de chute 15 concernée.

En outre, si sa fabrication a été défectueuse et s'il a échappé au contrôle correspondant, un tel flacon peut présenter sur son culot 12 une saillie, une carotte de moulage par exemple.

Dans l'un et l'autre cas son assise sur le convoyeur d'évacuation 16 est compromise.

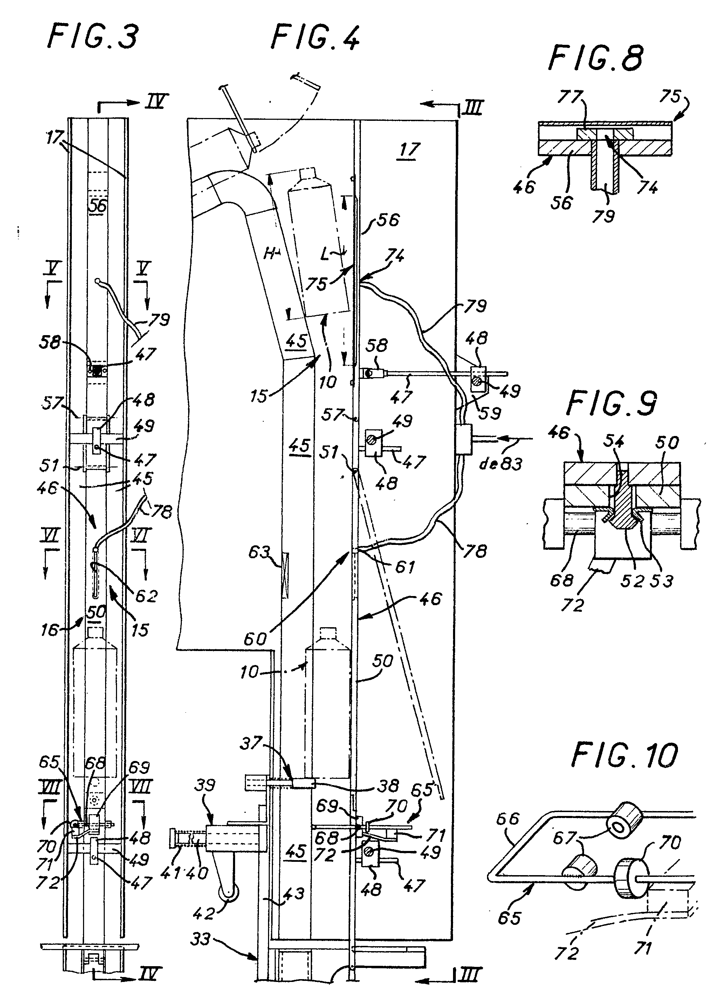

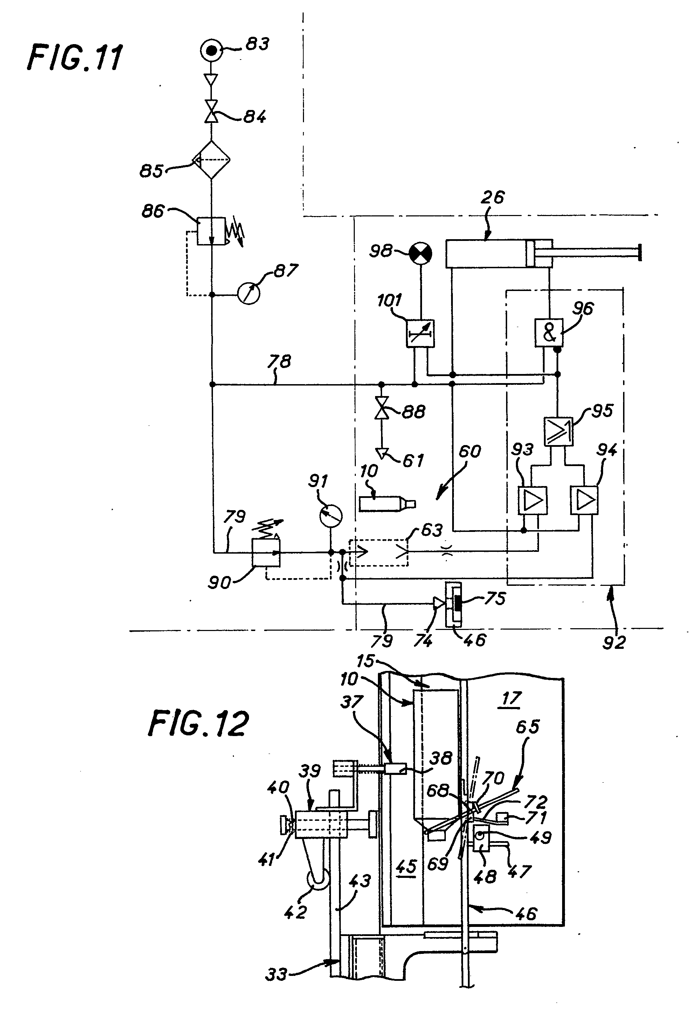

Or, entre la base des colonnes de chute 15 et celui-ci se trouve intervenir un couloir de distribution 33 qui, sous le contrôle d'une commande 34 synchronisée avec celle 35 du convoyeur d'évacuation 16, tel que schématisé en traits interrompus à la figure 2, est monté mobile transversalement en va-et-vient entre une position reculée d'attente, représentée en trait plein sur les figures 2 et 12, pour laquelle il retient momentanément les flacons 10 parvenus à la base des colonnes de chute 15, et une position avancée de libération, représentée en trait plein à la figure 4, pour laquelle il libère ces flacons 10 et les laisse parvenir au convoyeur d'évacuation 16.

Si l'assise sur ce convoyeur d'évacuation 16 de l'un quelconque des flacons 10 qui vient ainsi y reposer n'est pas correctement assurée, un tel flacon 10 peut basculer et, lors du retour en position avancée du tiroir de distribution 33, provoquer un blocage de celui-ci, conduisant, par les sécurités usuelles en la matière, à un arrêt de l'ensemble du dispositif.

A la base de chaque colonne de chute 15 il est prévu (figures 4 et 12), en association avec le tiroir de distribution 33, un doigt d'arrêt 37.

Ce doigt d'arrêt, dont la tête 38 est élastiquement effaçable, est porté par un chariot 39 qui, commun à l'ensemble des colonnes de chute 15, est, parallèlement au tiroir de distribution 33, monté transversalement mobile en va-et-vient sur des guides 40, à l'encontre de ressorts de rappel 41.

Ce chariot 39 porte à chacune de ses extrémités un galet 42 sur lequel peut agir une barre d'entraînement 43 solidaire du tiroir de distribution 33.

Pour la position avancée de libération du tiroir de distribution 33, le chariot 39 occupe lui-même une position avancée pour laquelle les doigts d'arrêt 37 font saillie dans les colonnes de chute 15, et y retiennent l'ensemble des flacons 10 présents dans celles-ci.

Lors de son passage en position reculée d'attente, le tiroir de distribution 33 vient, par les barres 43 qu'il porte, entraîner, après une course libre, le chariot 39, et les doigts d'arrêt 37, passant en position de retrait, tel que représenté à la figure 12, libèrent, dans les colonnes de chute 15, les flacons 10 qu'ils y ont préalablement retenus.

Ces flacons 10 avancent dès lors d'un pas dans les colonnes de chute 15, et une série de flacons 10 parvient au tiroir de distribution 33, qui les retient momentanément, tel que représenté sur les figures 2 et 12.

Lorsque le tiroir de distribution 33 revient en position avancée de libération, il libère la série de flacons qu'il a ainsi momentanément retenue, et la laisse parvenir au convoyeur d'évacuation 16.

Au début de son mouvement initial de retour, le tiroir d'évacuation 33 est accompagné par le chariot 39.

Mais celui-ci parvient à sa position avancée avant le tiroir de distribution 33, en sorte que, avant que celui-ci ne libère la série de flacons 10 qu'il retient momentanément, les doigts d'arrêt 38 s'engagent à nouveau sous les flacons 10 surmontant les précédents et les empêchent dès lors de suivre ceux-ci.

Outre les deux joues 17 qui la délimitent, chaque colonne de chute 15 comporte, d'une part deux guides arrière 45, qui sont portés chacun respectivement par lesdites joues 17, et d'autre part une plaque avant 46, établie entre celles-ci.

Les guides arrière 45 et la plaque avant 46 sont établis de manière à circonscrire la section transversale des flacons 10 à traiter, tel que schématisé en traits interrompus à la figure 6.

Par exemple, les guides arrière 45 sont fixes, et la plaque avant 46 est montée réglable en position.

Dans la forme de réalisation représentée, les guides arrière 45 sont en quart de cercle accolé à un rectangle, mais, tel que décrit dans le premier certificat d'addition FR-A-2 160 288 rattaché au brevet français FR-A-2 134 224 mentionné ci-dessus, ils peuvent être hémi-circulaires.

La plaque avant 46, pour son réglage en position, est, (figures 3 et 4) de place en place, portée par des tiges 47 elles-mêmes montées réglables en position dans des noix 48 portées par des entretoises 49 établies d'une des joues 17 correspondantes à l'autre.

Suivant un aspect de l'invention, une portion au moins d'une telle plaque avant 46 est montée mobile, pour accès à la partie correspondante de la colonne de chute 15 concernée.

En pratique, dans l'exemple de réalisation représenté, c'est le cas pour la portion basse 50 de la plaque avant 46, celle-ci étant, par une charnière 51 disposée à sa partie supérieure, montée pivotante entre une position de fermeture, représentée en trait plein à la figure 4, pour laquelle elle établit la continuité de la plaque avant 46, et une position d'ouverture, représentée en traits interrompus à la figure 4, pour laquelle elle laisse un libre accès à la partie de la colonne de chute 15 correspondante située au droit du doigt d'arrêt 37 que comporte celle-ci.

Pour le verrouillage de la portion basse 50 ainsi pivotante de la plaque avant 46, de simples moyens d'encliquetage, tels que ceux représentés à la figure 9, peuvent être prévus.

Tel que représenté, ces moyens d'encliquetage comportent, d'une part un ergot 52, qui est porté en saillie par la partie courante de la plaque avant 46, et d'autre part, des lames de ressort 53, qui sont portées par la portion pivotante 50 de la plaque avant 46, de part et d'autre d'une ouverture 54 de celle-ci propre à son engagement sur l'ergot 52 précédent.

Dans la forme de réalisation représentée, la portion haute 56 de la plaque avant 46, est, elle aussi, montée pivotante, pour être réglable en position.

A cet effet, cette portion haute 56 est, à sa base, articulée par une charnière 57 à la partie courante de la plaque avant 46, et la tige 47 qui la porte lui est articulée par une chape 58, l'entretoise 49 portant la noix 48 sur laquelle cette tige 47 est elle-même montée réglable en position étant portée non pas directement par les joues 17 correspondantes, comme précédemment, mais par des équerres 59 rapportées sur celles-ci, à l'avant de ces joues 17 (non représentées sur la figure 3).

Tel que décrit dans le brevet français mentionné ci-dessus, chacune des colonnes de chute 15 est individuellement équipée d'un détecteur de présence 60, qui, sensible à la présence prolongée à son droit d'un flacon 10, est apte à commander enconséquence l'arrêt du convoyeur 18 du couloir de reprise 14 correspondant.

Dans la forme de réalisation représentée, ce détecteur de présence 60 comporte, d'une part, une buse de soufflage 61, qui est établie à la faveur d'une fente 62 que présente longitudinalement à cet effet en hauteur la portion pivotante 50 de la plaque avant 46 de la colonne de chute 15 concernée, et qui est ainsi réglable en hauteur dans celle-ci, et d'autre part, en regard de cette buse de soufflage 61, entre les guides arrière 45 de cette colonne de chute 15, une cellule fluidique 63.

Suivant l'invention, à la base de chaque colonne de chute 15, en dessous du détecteur de présence 60 que comporte ainsi celle-ci, il est prévu un capteur 65, apte notamment à retenir un flacon 10 si celui-ci se présente suivant l'orientation opposée à celle recherchée, c'est-à-dire si ce flacon se présente goulot 11 en avant, et apte, également, à retenir un tel flacon 10 si celui-ci, se présentant culot 12 en avant, présente une saillie suffisante sur ce culot 12, une carotte de moulage par exemple.

S'agissant, donc, dans l'exemple de réalisation représenté, du traitement de flacons à col, le capteur 65 suivant l'invention comporte, dans la forme de réalisation représentée, une boucle 66, dans laquelle peut s'engager le col ou goulot 11 d'un flacon 10, ou une quelconque autre saillie de celui-ci, il est monté librement pivotant entre, d'une part, une position normale d'attente, pour laquelle ladite boucle 66 s'étend sensiblement transversalement dans la colonne de chute 15 concernée et est ainsi interposée sur le trajet des flacons 10 dans celle-ci, tel que représenté à la figure 4, et, d'autre part, une position basculée de service pour laquelle, soit, repoussé par un flacon 10, il laisse passer celui-ci, tel que schématisé en traits interrompus à la figure 12, soit, un flacon 10 étant venu en prise avec sa boucle 66, il retient par coincement ledit flacon 10, tel que schématisé en trait plein à la figure 12, et il lui est associé des moyens de rappel qui le sollicitent en permanence en direction de sa dite position normale d'attente.

Dans la forme de réalisation représentée, la capteur suivant l'invention 65 est simplement constitué par une tringle conformée en U, dont la partie médiane en forme de trapèze constitue la boucle 66, et sur les branches latérales de laquelle sont chacune respectivement rapportées deux douilles 67 pour son engagement à tourillonnement sur les extrémités d'un axe 68 rapporté à cet effet par une plaquette 69 sur la plaque avant 46 de la colonne de chute 15 concernée.

En pratique, dans la forme de réalisation représentée, les moyens de rappel associés au capteur 65 ainsi constitué résultent de la simple gravité, les branches latérales de la tringle constituant ce capteur se prolongeant au-delà des douilles 67 par lesquelles il est articulé, et l'une de ces branches latérales portant, réglable en position sur elle, une masselotte 70 formant contrepoids.

De préférence, par réglage en position de cette masselotte 70, il est fait en sorte que, pour la position normale d'attente du capteur 65, celui-ci soit sensiblement en équilibre indifférent, afin qu'il puisse aisément être repoussé par un flacon 10 lors de sa chute dans la colonne de chute 15.

De préférence également, pour cette position normale d'attente, le capteur 65 porte sur un moyen amortisseur.

En pratique, dans l'exemple de réalisation représenté, il s'agit d'un tampon en matière élastique 71, qui est porté par une console 72 solidaire de la plaquette 69, et sur laquelle l'une des branches latérales de la tringle constituant le capteur 65 vient, en position normale d'attente, reposer par son extrémité libre.

Suivant l'invention, en partie haute de chaque colonne de chute 15, il est prévu un deuxième détecteur de présence 74, qui, en parallèle par rapport au premier, c'est-à-dire par rapport au détecteur de présence 60, est, comme lui, apte à commander l'arrêt du convoyeur 18 du couloir de reprise 14 correspondant.

De préférence, et tel que représenté, ce deuxième détecteur de présence 74 est piloté par un volet 75, qui, de longueur L supérieure à la hauteur H des flacons 10, s'étend longitudinalement de part et d'autre du détecteur de présence 74 dans la colonne de chute 14 concernée, en doublant en épaisseur l'une des parois de celle-ci, à distance de cette paroi.

En pratique, dans la forme de réalisation représentée, ce volet 75 double en épaisseur la portion haute 56 de la plaque avant 46 formant l'une des parois des colonnes de chute 15, et, à cet effet, la partie correspondante de ladite portion 56 de cette plaque avant 46 est localement d'épaisseur réduite.

Dans la forme de réalisation représentée, le volet 75 est constitué par un simple clinquant, c'est-à-dire une simple tôle d'épaisseur suffisamment faible pour être aisément déformable, fixé à chacune de ses extrémités à la portion 56 de la plaque avant 46, et le détecteur de présence 74 est simplement constitué par une buse de soufflage débouchant en regard de ce volet 75, dans la zone médiane de celui-ci, au centre d'un joint d'étanchéité 77 dont ledit volet 75 est normalement légèrement écarté, tel que représenté à la figure 8.

Dans cette forme de réalisation, le détecteur de présence 74 est donc un détecteur fluidique à fuite contrôlée.

Par des canalisations souples 78, 79, les buses de soufflage 61, 74 sont chacune respectivement reliées à une source d'air comprimé, comme décrit ci-après.

Tel qu'illustré par le bloc diagramme de la figure 11, cette source d'air comprimé, qui y est schématisée par la référence 83, peut être contrôlée par une vanne 84, un épurateur 85 un détendeur 86 et un manomètre 87.

Elle alimente en parallèle, d'une part, par la canalisation 78 et sous le contrôle d'un robinet d'arrêt 88, la buse de soufflage 61, et, d'autre part, par la canalisation 79 et sous le contrôle d'un détendeur 90 et d'un manomètre 91, la cellule fluidique 63 et la buse de soufflage 74.

Cette cellule fluidique 63 et cette buse de soufflage 74 pilotent en parallèle un circuit logique fluidique 92 sous le contrôle duquel se trouve le vérin 26 commandant l'état de fonctionnement ou d'arrêt du convoyeur 18 du couloir de reprise 14 correspondant.

Dans la forme de réalisation représentée, ce circuit logique fluidique 92 comporte deux amplificateurs 93, 94 sur l'une des entrées desquels sont chacune respectivement branchées en parallèle la cellule fluidique 63 et la buse de soufflage 74, et dont l'autre des entrées reçoit directement la pression contrôlée par le manomètre 87.

Les sorties de ces amplificateurs 93, 94 sont elles-mêmes branchées en parallèle sur les entrées d'une porte 95 assurant la fonction «OU».

La sortie de cette porte 95 contrôle directement l'une des extrémités du vérin 26, tandis qu'elle ne contrôle l'autre des extrémités de ce vérin 26 que par l'intermédiaire d'une porte 96, qui assure la fonction «NON» et dont l'autre entrée, reçoit directement la pression contrôlée par le manomètre 87.

Suivant l'invention, à chaque colonne de chute 15, il est associé un organe de signalisation 98, un simple voyant lumineux par exemple, tel que représenté sur le bloc diagramme de la figure 11, qui, piloté par le circuit logique fluidique 92 en parallèle vis-à-vis du vérin 26 correspondant, est, ainsi, sensible à l'état de fonctionnement ou d'arrêt du convoyeur 18 du couloir de reprise 14 concerné.

Tel que schématisé à la figure 2, un tel voyant 98 peut par exemple être éventuellement établi à un poste éloigné 100, distinct du dispositif lui-même, et permettant la surveillance à distance de celui-ci.

Quoi qu'il en soit, sa commande est de préférence temporisée, un temporisateur 101 étant interposé entre lui et le circuit logique fluidique 92.

Lorsque les flacons 10 à traiter sont tous corrects, et tombent tous correctement culot 12 en avant dans les colonnes de chute 15, les opérations se déroulent comme décrit ci-dessus.

A chaque passage d'un flacon 10, le jet de la buse de soufflage 61 du détecteur de présence 60 d'une telle colonne de chute 15 est empêché de parvenir à la cellule fluidique 63 correspondante mais celle-ci est convenablement temporisée pour que, d'un tel simple défilement des flacons 10, il ne résulte aucune incidence sur le circuit logique fluidique 92.

Lors de leur chute dans les colonnes de chute 15, les flacons 10 repoussent simplement, par leur culot 12, le capteur 65 suivant l'invention, tel que schématisé en traits interrompus à la figure 12, et ce capteur 65 est donc alors sans intervention.

Entre deux flacons 10, il revient rapidement en position normale d'attente, et du fait, d'une part de ce qu'il est en équilibre quasi indifférent pour cette position, et d'autre part de la présence de l'amortisseur 71, il n'est pratiquement l'objet d'aucun rebondissement.

Il est donc prêt à intervenir à chaque passage de flacons 10.

Si, maintenant, un tel flacon 10 se présente goulot 11 en avant, il s'engage par son goulot 11 dans la boucle 66 du capteur 65 suivant l'invention, et il se trouve dès lors en quelque sorte «piégé» par celui-ci.

Il en est de même s'il présente une carotte de moulage en saillie sur son culot 12.

En effet, repoussant dans sa chute de capteur 65, il le contraint à pivoter, et celui-ci, en retour, le rapproche progressivement de la plaque avant 46 de la colonne de chute 15 concernée, jusqu'à son blocage contre cette plaque avant 46.

Lorsqu'un flacon 10 est donc mal orienté, ou qu'il présente en saillie une carotte de moulage, il y a, par le capteur 65 suivant l'invention, une retenue mécanique de ce flacon 10 dans la colonne de chute 15 concernée, et ceci de manière définitive, c'est-à-dire jusqu'à intervention de la personne ayant à charge la surveillance du dispositif.

Il en résulte un engorgement progressif de la colonne de chute 15 concernée, qui, détecté par le détecteur de présence 60, provoque, par le circuit logique fluidique 92, un changement d'état du vérin 26, et donc, en pratique, l'arrêt du convoyeur 18 du couloir de reprise 14 correspondant.

L'alimentation de la colonne de chute 15 concernée est dès lors arrêtée.

Les autres colonnes de chute 15 du dispositif continuent par contre à fonctionner, et, ainsi, la présence d'un flacon 10 ne se présentant pas dans l'orientation souhaitée ou comportant en saillie une carotte de moulage n'a aucune incidence sur le fonctionnement d'ensemble de ce dispositif.

Après un temps déterminé, contrôlé par le temporisateur 101, la personne ayant à charge la surveillance de ce dispositif est avertie, par le voyant lumineux constituant l'organe de signalisation 98, qu'une des colonnes de chute 15 de celui-ci se trouve en arrêt.

Lorsqu'elle le juge nécessaire, elle intervient, en assurant l'élimination du flacon 10 piégé par le capteur 65 suivant l'invention, après ouverture de la portion basse 50 de la plaque avant 46.

En pratique, la temporisation assurée par le temporisateur 101 est supérieure à celle que comporte par lui-même le détecteur de présence 60 pour être insensible au simple défilement des flacons 10.

Dans la forme de réalisation représentée, la temporisation du détecteur de présence 60 est d'ailleurs simplement assurée par la longueur de la canalisation reliant la cellule fluidique 63 de celui-ci au circuit logique fluidique 92.

Si, corollairement, par suite d'un quelconque écrasement, se présente en tête d'une colonne de chute 15 un flacon ayant transversalement une dimension supérieure à la normale et suffisante pour en provoquer le coincement dans cette colonne de chute 15, un tel flacon 10 défectueux vient agir sur le volet 75 pilotant le détecteur de présence 74, en un point quelconque de ce volet 75.

Il en résulte que, ainsi localement déformé, le volet 75 se rapproche du joint d'étanchéité 77 entourant la buse de soufflage constituant ce détecteur de présence 74, et que le régime de fuite établi normalement au débouché de cette buse de soufflage entre ce joint d'étanchéité 77 et le volet 75 se trouve perturbé, voire même annulé.

Comme précédemment, le circuit logique fluidique 92 commande un changement d'état du vérin 26, et donc l'arrêt du convoyeur 18 du couloir de reprise 14 correspondant.

Comme précédemment également, l'opérateur assurant la surveillance du dispositif est averti de cet arrêt par le voyant lumineux 98, et peut intervenir, en assurant l'élimination du flacon 10 défecteux de la colonne de chute 15 dans laquelle il est coincé.

D'une manière générale, un arrêt de chaque colonne de chute 15 est à tout moment possible, par fermeture du robinet d'arrêt 88 contrôlant la buse de soufflage 61, ce qui permet, par exemple, si désiré, de réduire le nombre de colonnes de chute en activité du dispositif.

Bien etendu, la présente invention ne se limite pas à la forme de réalisation décrite et représentée, mais englobe toute variante d'exécution.

En particulier, le ou les détecteurs de présence mis en oeuvre, au lieu d'être fluidiques, pourraient, de manière connue en soi, être électriques.

En outre, le domaine d'application de l'invention n'est pas limité au seul traitement des flacons à col, mais s'étend au contraire d'une manière plus générale à celui de tous les objets creux.

Il suffit qu'un dispositif de retournement sélectif et qu'un capteur puissent agir mécaniquement sur ceux-ci.

Par exemple, s'agissant de simples flacons à large ouverture, un tel dispositif de retournement sélectif et un capteur peuvent comporter un doigt propre à s'engager dans une telle ouverture.

**Revendications**

1. Dispositif pour la distribution automatique et orientée de corps creux (10), tels que flacons à col par exemple, du genre comportant, notamment, un bac d'alimentation (13) dans lequel lesdits corps creux (10) sont déversés en vrac, une pluralité de couloirs de reprise (14) à convoyeur sans fin individuel (18) plongeant dans ledit bac (13), une pluralité de colonnes de chute (15) disposées chacune respectivement à l'aplomb de l'extrémité d'un couloir de reprise (14), et un convoyeur d'évacuation (16) disposé à l'aplomb desdites colonnes de chute (15), chacune desdites colonnes de chute (15) étant individuellement équipée d'un détecteur de présence (60), qui, sensible à la présence prolongée à son droit d'un corps creux (10), est apte à commander en conséquence l'arrêt du convoyeur sans fin (18)) du couloir de reprise (14) correspondant, caractérisé en ce que, à la base de chaque colonne de chute (15), en dessous du détecteur de présence (60) que comporte celle-ci, il est prévu un capteur (65), apte notamment à retenir un corps creux (10) si celui-ci se présente suivant l'orientation opposée à celle recherchée.

2. Dispositif suivant la revendication 1, caractérisé en ce que, s'agissant du traitement de flacons à col, le capteur (65) comporte une boucle (66) dans laquelle peut s'engager le goulot (11) d'un tel flacon ou une quelconque autre saillie de celui-ci, il est monté librement pivotant entre d'une part une position normale d'attente, pour laquelle sa dite boucle (66) s'étend sensiblement transversalement dans la colonne de chute (15) et est ainsi interposée sur le trajet des flacons, et, d'autre part, une position basculée de service, pour laquelle, soit, repoussé par un flacon, il laisse passer celui-ci, soit, un flacon étant venu en prise avec sa boucle (66), il retient par coincement ledit flacon, et il lui est associé des moyens de rappel (70) qui le sollicitent en permanence en direction de sa dite position normale d'attente.

3. Dispositif suivant la revendication 2, caractérisé en ce que, en position normale d'attente, le capteur (65) porte sur un moyen amortisseur (71).

4. Dispositif suivant l'une quelconque des revendications 1 à 3, et dans lequel, en partie haute de chaque colonne de chute (15), il est prévu un deuxième détecteur de présence (74), qui, en parallèle par rapport au premier, est apte à commander l'arrêt du convoyeur sans fin (18) du couloir de reprise (14) correspondant, caractérisé en ce que ledit deuxième détecteur de présence (74) est piloté par un volet (75) qui, de longueur supérieure à la hauteur des corps creux (10) à traiter, s'étend longitudinalement de part et d'autre dudit détecteur (74) dans la colonne de chute (15), endoublant en épaisseur l'une des parois de celle-ci, à distance de cette paroi.

5. Dispositif suivant la revendication 4, caractérisé en ce que le volet (75) pilotant le deuxième détecteur de présence (75) est un simple clinquant, et est donc déformable.

6. Dispositif suivant l'une quelconque des revendications 4, 5, caractérisé en ce que le deuxième détecteur de présence (74) est un détecteur fluidique à fuite contrôlée.

7. Dispositif suivant l'une quelconque des revendications 1 à 6, caractérisé en ce que, à chaque colonne de chute (15), il est associé, éventuellement à un poste éloigné, un organe de signalisation (98), tel que voyant lumineux, de préférence temporisé, sensible à l'état de fonctionnement ou d'arrêt du convoyeur sans fin (18) du couloir de reprise (14) correspondant.

8. Dispositif suivant l'une quelconque des revendications 1 à 7, dans lequel chaque colonne de chute (15) est formée entre deux joues latérales (17) et comporte entre celles-ci une plaque avant (46), caractérisé en ce que, une portion au moins d'une telle plaque avant (46) est montée mobile, pour accès à la partie correspondante de la colonne de chute (15).

9. Dispositif suivant la revendication 8, caractérisé en ce que la portion basse (50) de la plaque avant (46) de chaque colonne de chute (15) est montée pivotante.

10. Dispositif suivant l'une quelconque des revendications 8, 9, caractérisé en ce que la portion haute (56) de la plaque avant (46) de chaque colonne de chute (15) est montée pivotante et est réglable en position.

**Claims**

1. An apparatus for the automatic and directional distribution of hollow articles (10), for example necked bottles, of the type comprising, in particular, a supply container (13) into which said hollow articles (10) are tipped in bulk, a plurality of upwardly extending channels (14) with respective endless conveyors (18) dipping into said container (13), a plurality of downwardly extending columns (15) each respectively arranged directly below the end of an upwardly extending channel (14), and a discharge conveyor (16) disposed directly below said downwardly extending columns (15), each of said downwardly extending columns (15) being individually provided with a sensing device (60) which responds to the prolonged presence, at right-angles thereto, of a hollow article (10) and which is designed to actuate accordingly the stoppage of the endless conveyor (18) of the corresponding upwardly extending channel (14), characterised in that at the bottom end of each downwardly extending column (15), below the sensing device (60) with which the latter is provided, a pick-up means (65) is provided which is designed in particular to hold a hollow article (10) when this latter is present in the orientation opposite to that desired.

2. An apparatus according to Claim 1, characterised in that, in the case in which necked bottles are to be handled, the pick-up means (65) comprises a loop (66) in which the neck (11) of such a bottle or any other projection of this latter can engage and it is mounted to pivot freely between, on the one hand, a normal rest position in which said loop (66) extends substantially transversely into the downwardly extending column (15) and is thus interposed in the path of the bottles and, on the other hand, a pivoted operative position in which either, having been pushed away by a bottle, it allows the latter to pass or, a bottle having engaged with its loop (66), it retains said bottle by jamming action, and it is associated with return means (70) which permanently urge it towards its normal rest position.

3. An apparatus according to Claim 2, characterised in that, in the normal rest position, the pick-up means (65) bears on a damping means (71).

4. An apparatus according to any one of Claims 1 to 3, and in which in the top part of each downwardly extending column (15) there is provided a second sensing device (74) which, similarly to the first sensing device, is designed to actuate the stoppage of the endless conveyor (18) of the corresponding upwardly extending channel (14), characterised in that said second sensing device (74) is controlled by a shutter (75) which, being of greater length than the height of the hollow article (10) to be handled, extends longitudinally along either side of said second sensing device (74) in the downwardly extending column (15) and doubles the tickness of one wall of the latter, being spaced from said wall.

5. An apparatus according to Claim 4, characterised in that the shutter (75) controlling the second sensing device (74) is a simple foil and is thus deformable.

6. An apparatus according to either of Claims 4 and 5, characterised in that the second sensing device (74) is a fluidic sensor with controlled outflow.

7. An apparatus according to any one of Claims 1 to 6, characterised in that each downwardly extending column (15) is associated, optionally at a remote location, with an indicating means (98), such as an indicator light, preferably with time-delay, responsive to the operating or stopped condition of the endless conveyor (18) of the corresponding upwardly extending channel (14).

8. An apparatus according to any one of Claims 1 to 7, in which each downwardly extending column (15) is formed between two side members (17) and comprises between these latter a front plate (46), characterised in that at least one part of the front plate (46) is movably mounted for access to the corresponding part of the downwardly extending column (15).

9. An apparatus according to Claim 8, characterised in that the lower part (50) of the front plate (46) of each downwardly extending column (15) is mounted to pivot.

10. An apparatus according to either of Claims 8 and 9, characterised in that the upper part (56) of the front plate (46) of each downwardly extending column (15) is mounted to pivot and is adjustable in position.

**Patentansprüche**

1. Vorrichtung zum Ausrichten und automatischen Verteilen von Hohlkörpern (10), beispielsweise Halsflaschen, mit insbesondere einem Aufgabebehälter (13), in welchem sich die Hohlkörper (10) in loser Füllung befinden, einer Mehrzahl von Hubfördervorrichtungen (14) mit einzelnen Endlosförderern (18), die in den Behälter (13) hineintauchen, einer Mehrzahl von Absturzrutschen (15), de jeweils lotrecht unter dem Ende einer Hubfördervorrichtung (14) angeordnet sind, und mit einem Abtransportförderer (16), der senkrecht zu den Absturzrutschen (15) angeordnnet ist, wobei jede Absturzrutsche (15) einzeln mit einem Anwesenheitsdetektor (60) ausgestattet ist, der auf die längerdauernde Anwesenheit eines Hohlkörpers (10) im rechten Winkel zu ihm anspricht und in der Lage ist, daraufhin das Anhalten des Endlosförderers (18) der zugehörigen Hubfördervorrichtung (14) herbeizuführen, dadurch gekennzeichnet, dass am Fusse jeder Absturzrutsche (15) unterhalb des darin angeordneten Anwesenheitsdetektors (60) ein Sensor (65) vorgesehen ist, der insbesondere einen Hohlkörper (10) zurückzuhalten vermag, wenn dieser entgegengesetzt seiner Soll-Lage ausgerichtet ist.

2. Vorrichtung nach Anspruch 1, dadurch gekennzeichnet, dass bei der Behandlung von Halsflaschen der Sensor (65) einen Bügel (66) aufweist, in dem der Hals (11) oder ein anderweitiger Vorsprung einer solchen Flasche sich verfangen kann, dass er frei drehbar zwischen einerseits einer normalen Bereitschaftsstellung, in der der genannte Bügel (66) im wesentlichen quer in der Absturzrutsche (15) steht und auf diese Weise in die Bahn der Flaschen hineinragt, und andererseits einer gekippten Arbeitsstellung ist, in der er, etwa durch eine Flasche zurückgestossen, diese passieren lässt oder, wenn eine Flasche in Eingriff mit seinem Bügel (66) geraten ist, er diese Flasche durch Verklemmen zurückhält, und dass ihm eine Rückstelleinrichtung (70) zugeordnet ist, die ihn ständig in Richtung auf seine normale Bereitschaftsstellung beaufschlagt.

3. Vorrichtung nach Anspruch 2, dadurch gekennzeichnet, dass der Sensor (65) in seiner normalen Bereitschaftsstellung auf einem Dämpfungsorgan ruht.

4. Vorrichtung nach einem der Ansprüche 1 bis 3, wobei in dem oberenn Teil jeder Absturzrutsche (15) ein zweiter Anwesenheitsdetektor (74) vorgesehen ist, der parallel zu dem ersten in der Lage ist, das Anhalten des Endlosförderers (18) der zugeordneten Hubfördervorrichtung (14) herbeizuführen, dadurch gekennzeichnet, dass der zweite Anwesenheitsdetektor (74) durch einen Flügel (75) gesteuert wird, dessen Länge grösser ist als die Höhe des zu behandelnden Hohlkörpers (10) und der sich in der Absturzrutsche (15) in Längsrichtung beiderseits über den Detektor (74) hinaus erstreckt, wobei die eine der Wände dieser Rutsche mit Abstand von ihr verdoppelt wird.

5. Vorrichtung nach Anspruch 4, dadurch gekennzeichnet, dass der den zweiten Anwesenheitsdetektor (74) steuernde Flügel (75) aus einfacher Metallfolie besteht und daher verformbar ist.

6. Vorrichtung nach Anspruch 4 oder 5, dadurch gekennzeichnet, dass der zweite Anwesenheitsdetektor (74) ein Fluid-Lecksuchdetektor ist.

7. Vorrichtung nach einem der Ansprüche 1 bis 6, dadurch gekennzeichnet, dass jeder Absturzrutsche (15), unter Umständen an einem entfernten Bedienungsstand, ein Anzeigeorgan (98) zugeordnet ist, etwa eine vorzugsweise verzögerte Leuchtanzeige, die auf den Lauf oder die Laufunterbrechung des Endlosförderers (18) der zugeordnetenn Hubfördervorrichtung (14) anspricht.

8. Vorrichtung nach einem der Ansprüche 1 bis 7, wobei jede Absturzrutsche (15) zwischen zwei Seitenwänden (17) ausgebildet ist und zwischen diesen eine vordere Platte (46) aufweist, dadurch gekennzeichnet, dass mindestens ein Teil einer derartigen vorderen Platte (46) beweglich angeordnet ist, um den Zugang zu dem entsprechenden Abschnitt der Absturzrutsche (15) zu ermöglichen.

9. Vorrichtung nach Anspruch 8, dadurch gekennzeichnet, dass der untere Teil (50) der vorderen Platte (46) jeder Absturzrutsche (15) schwenkbar angebracht ist.

10. Vorrichtung nach Anspruch 8 oder 9, dadurch gekennzeichnet, dass der obere Teil (56) der vorderen Platte (46) jeder Absturzrutsche (15) schwenkbar und in seiner Lage einstellbar angebracht ist.

FIG.1

FIG.5

FIG.6

FIG.7

# FIG. 2

FIG.3  FIG.4  FIG.8

FIG.9

FIG.10

**FIG.11**

**FIG.12**